# EUROPEAN PATENT SPECIFICATION

(11) **EP 2 220 366 B1**
(45) Date of publication and mention of the grant of the patent: **14.12.2011**
(21) Application number: 08838820.2
(22) Date of filing: 20.10.2008
(51) Int. Cl.: F03D 3/00, F03D 3/06, F03D 11/04

(54) **CROSSED FLOW TURBINE**
QUERSTROMTURBINE
TURBINE À ÉCOULEMENT CROISÉ

(30) Priority: 18.10.2007 IT NA20070103
(43) Date of publication of application: 25.08.2010
(73) Proprietor: Caputi, Oreste, 80122 Napoli (IT)
(72) Inventor: Caputi, Oreste, 80122 Napoli (IT)
(74) Representative: Leone, Mario
(86) International application number: PCT/IB2008/054316
(87) International publication number: WO 2009/050685

(56) References cited:
- WO-A-2005/108783
- FR-A- 2 541 734
- NL-A- 9 002 718
- US-A- 4 005 947
- US-B1- 7 056 082

## Description

The present invention is related to a crossed flow wind-driven turbine, usually with a vertical axis.

The known vertical axis wind-driven turbines generally are composed by approximately cylindrical rotor bodies, including multiple threaded variously shaped thrust vanes, whose rotation is caused by the thrust of a fluid on the surface of the vanes.

The rotor turns with an axis perpendicular to the wind direction, while the axial vanes (i.e. having a height developing parallel to the rotation axis of the turbine) move according to the same direction. Typical examples are represented by the Savonius rotors. The peculiarity of these machines is their low rotation rate: the driving torque is high but the efficiency is generally poor.

This typology has the remarkable advantage of not requiring to be oriented according to the wind direction. It is distinguishable by the following features: low-power applications, operation not depending on the wind direction, low cut-in rate, low noise emission level and low visual impact.

In particular, the Savonius turbine exploits the canalization principle of the sole thrusting flow inside a channel determined by the coupling of only two opposed vanes, also involving a tail deriving torque.

US7056082 A**, which is the closest prior art,** NL9002718 **and** FR2541734 **disclose different examples of wind turbines wherein multiple vanes define inter-vane spaces having a constant height.**

The technical problem underlying the present invention is to provide a wind-driven turbine with improved performances with respect to the known ones. Such problem is solved by a wind-driven turbine as defined in claim 1 and following.

Hereinafter, two embodiments of a turbine according to the present invention will be presented, provided to an exemplificative and non-limitative purpose, with reference to the appended drawings wherein:
- Figure 1 shows the turbine as a whole, when the axis is vertically arranged, with the indication of the air flows.
- Figures 2 to 10 show the step-by-step mounting of the various parts of the turbine of Figure 1.
- Figure 11 shows, in the turbine of Figure 1, the splitting of the air flow which, after having impacted on the vane, splits in four flows to pass through the conveying channels connecting the previous vane to opposed vanes.
- Figure 12 follows Figure 11 to precisely indicate the various shown parts.
- Figure 13 assonometrically shows in a section the arrangement of the various superimposed conveyers in the turbine of Figure 1.
- Figure 14 shows frontally and in a section the arrangement of the various superimposed conveyers and identifies the section plane of following Figures 15, 16, 17, 18.
- Figure 15 shows, according to said horizontal section, the verious parts composing the indicated profiles.
- Figure 16 shows, according to said horizontal section, the various surfaces delimiting a conveying channel, identifying four vanes which, assembled adjacent to the conveying members, define the geometry of the conveying channels.
- Figure 17 shows the flow through a conveying channel, from a vane to the opposite thereof.
- Figure 18 shows the flow crossing in two orthogonal and superimposed conveying channels.
- Figure 19 shows a vertical section including the horizontal axis of the conveying channels among the vanes of Figure 1.
- Figure 20 shows an axial section including the axis of the conveying channels among the vanes of Figure 1.
- Figure 21 assonometrically shows the section of Figure 20.
- Figure 22 assonometrically shows a conveying member.
- Figure 23 shows some sections of said conveyer.
- Figure 24 frontally illustrates the assembly steps for the superimposition of the conveyers.
- Figures 25, 26 and 27 illustrate some variants of he turbine of the previous figures.

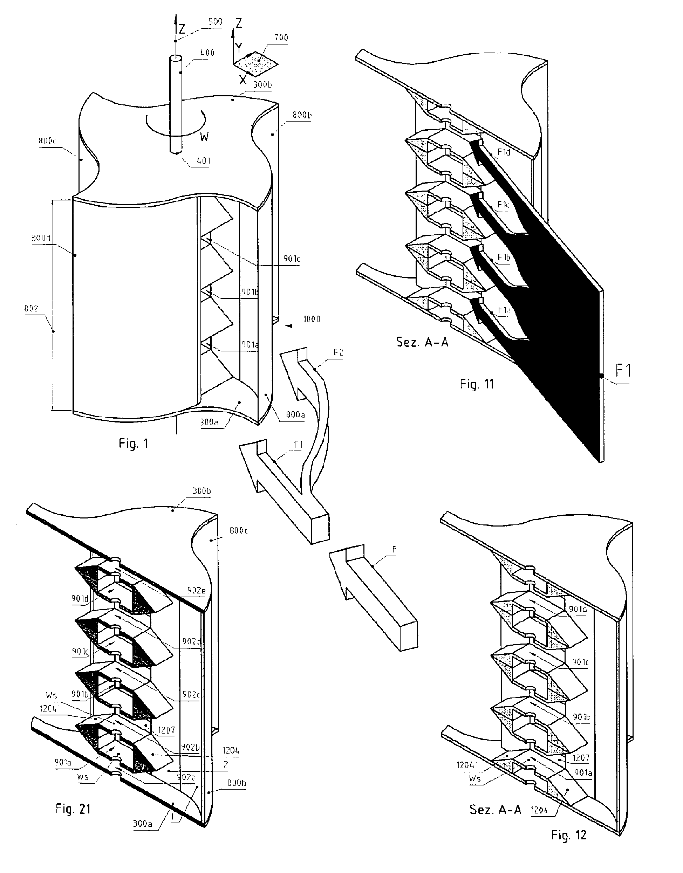

With reference to Figure 1, a turbine 1000 is equipped with four identical vanes 800a, 800b, 800c, 800d, opposed two by two, wherein the air flow or another driving fluid flow gets through a vane and get out from the opposite vane. The four vanes are kept in their seat being enclosed between a top shaped deck 300a and a bottom shaped deck 300b. A moving air flow F colliding the turbine involving two adjacent vanes 800a and 800b will be split in two flows F1, F2, directed to those vanes.

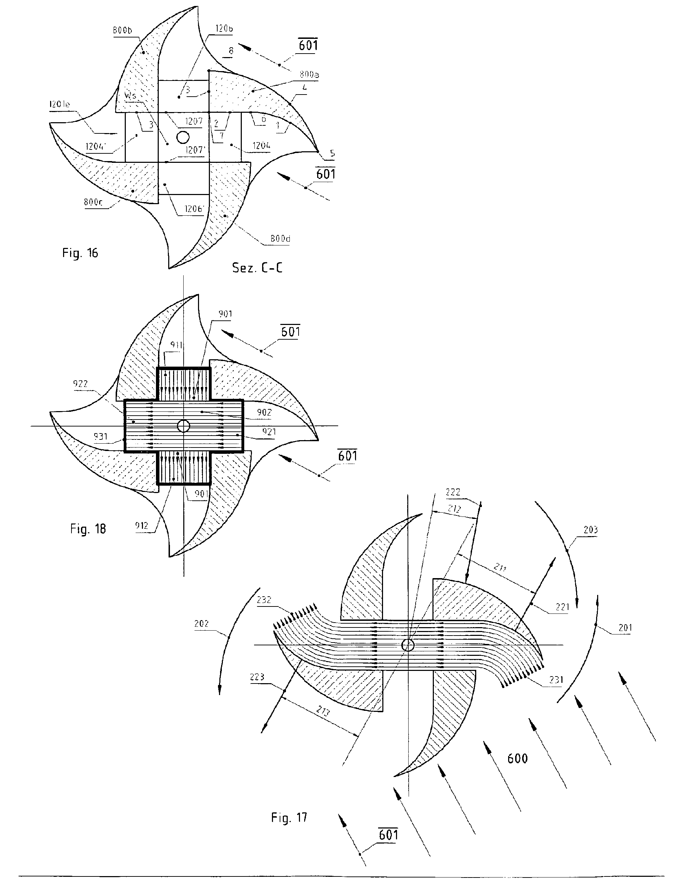

In connection with the vane 800a, the flow F1 related to it will collide on the vane itself in the first part of its path, causing an intake thrust for that vane 800a. Subsequently (Figure 11), the flow F1 is vertically split in four minor parallel flows F1a, F1b, F1c, F1d to pass through the conveying channels 901 a, 901 b, 901 c, 901 d getting out of the rear part thereof, to involve at the outlet the opposed vane 800c which, even being leeward, is active for the tail thrust (Figure 17).

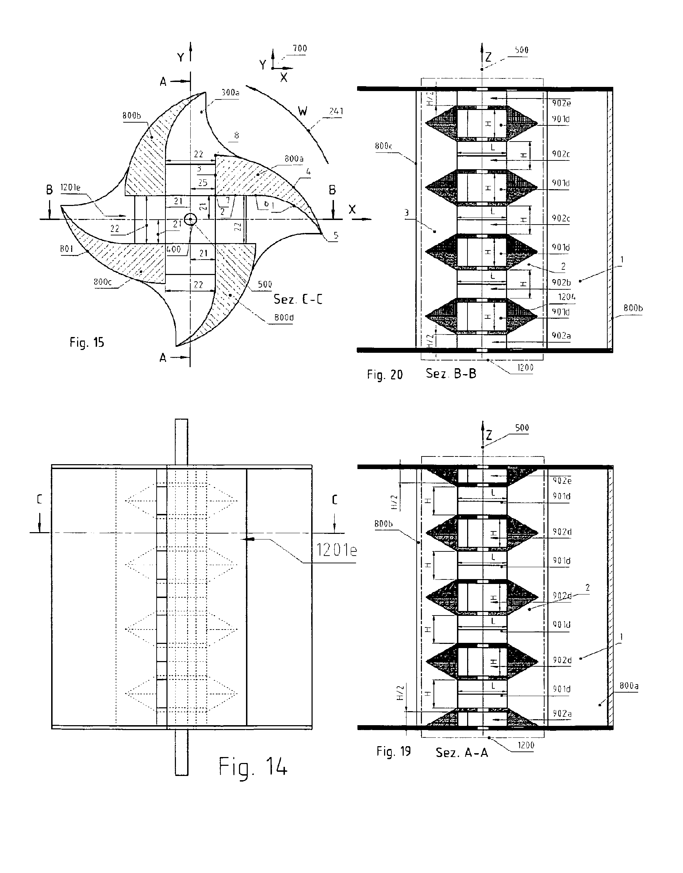

Wit reference to the vane 800b, the flow F2 related to it will split into five minor parallel flows to pass through the conveying channels 902a, 902b, 902c, 902d, 902e (all not visible in Figure 1 but shown in Figure 20), getting out of the rear part thereof, to involve at the outlet the opposed vane 800d which, even being leeward, will be active too.

It has to be noted that each of the channels 902a, 902e has a transversal section area which is the half of that of the remaining channels 902b, 902c, 902d, and thus, even if the channels connecting the vanes 800b and 800d are five, the flow rate thereof is equal as a whole to that of the four orthogonal channels 901 a, 901 b, 901 c, 901 d.

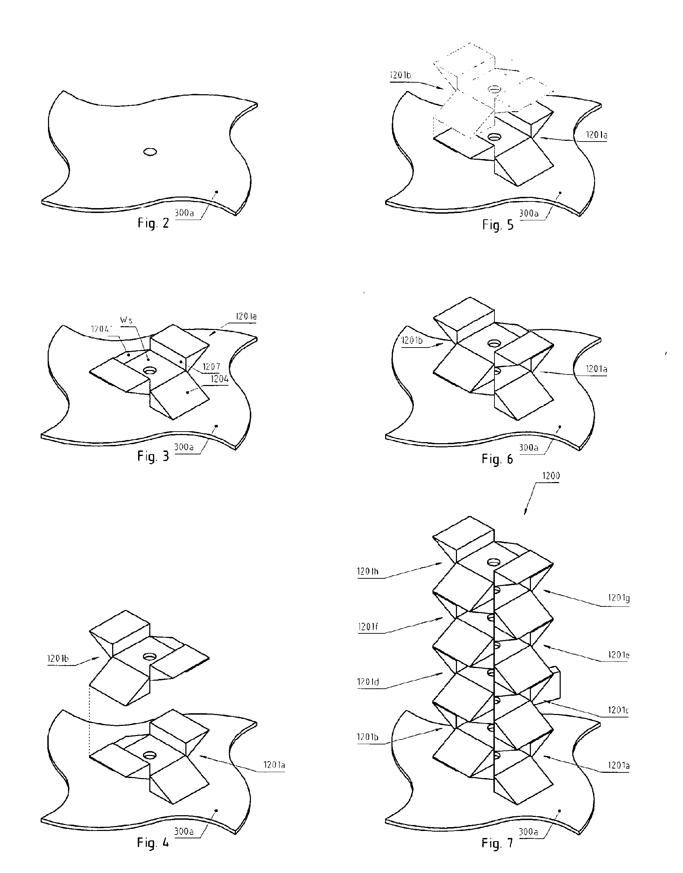

The flows F1a, F1b, F1c, F1d passing through the channels of 901 series are perpendicular to the flows F2a, F2b, F2c, F2d, F2e passing through the channels of 902 series, but without any interference between such perpendicular flows because they are separately channeled, thanks to the particular geometry of said channels determined by the presence of conveying members 1201a, 1201b, 1201c, 1201d, 1201e, 1201f, 1201g, 1201 h (se Figures 3 to 10) stacked at the driven shaft 400.

The preferred embodiment of the present invention is described hereinafter, and comprises a turbine 1000 with four identical vanes 800a, 800b, 800c, 800d, arranged so as to follow a polar repetition with a rotation around the axis Z 500, whose height develops according to the axis 500 of the turbine itself.

The turbine 1000 rotates at a rate W 241 around the axis 500 thereof, if collided by the wind or, more in general, if immersed in a moving fluid, called "driving fluid" 600, coming from any direction whose directional vector has its main component comprised in the plane XY 700, orthogonal to the axis Z 500. The turbine comprises four identical thrust vanes 800a, 800b, 800c, 800d, characterized by an approximately drop shaped wing profile 801, the sections thereof according to a plane parallel to plane XY are each rotated of 90° degrees around axis Z with respect to each other.

The projection on the plane XY of the section of each vane comprises a geometry wherein the perimeter 801 is described as follows with reference to Figure 3.

With reference to the vane 800a, whose perimeter is considered proceeding counterclockwise from point 5, a first section is provided, starting from point 5 and ending at point 6, called "concave thrusting profile" 1, having one or more curvature centers, commencing at point 5 more distant from axis Z 500.

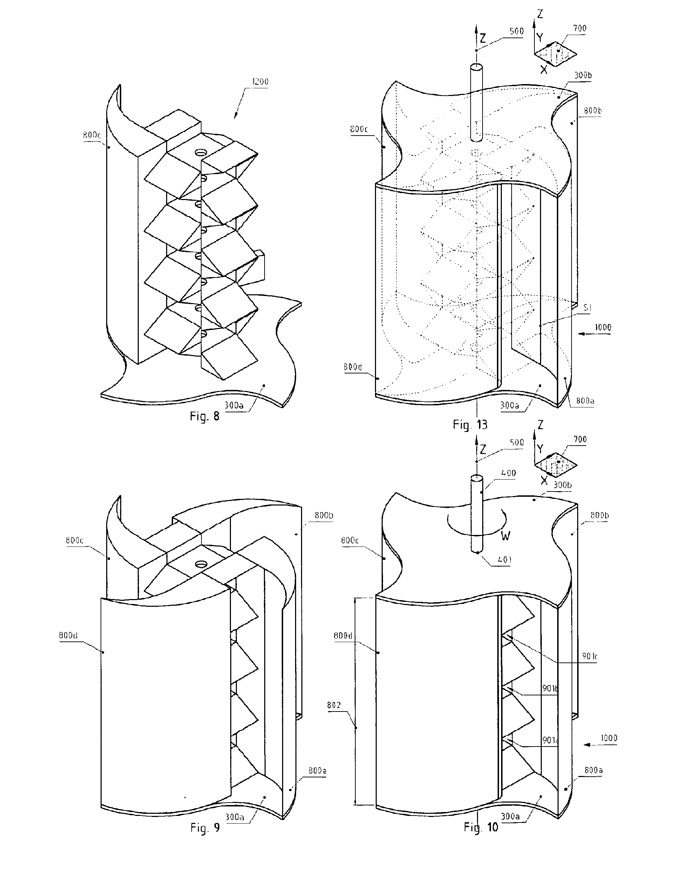

Said thrusting profile is suitable to capture the driving fluid 600 flow (Figure 6) thereby receiving the thrusting pressure which, applied along the whole height 802 of the vane, produces a resulting thrusting momentum FS 221, Figure 17, whose component on plane XY 700 perpendicular to axis Z, is far from axis Z of an amount called "arm A" 211. Such component 700 produces a "thrust driving torque" MS 201 putting into rotation the turbine 1000. Such "concave thrusting profile" ends at point 6 wherein the tangent thereof is parallel to one of axis X or Y (considered integral to the turbine). Point 6 is also the intersection of the sectioning plane with the segment S1 of Figure 13.

Said thrusting profile 1 is prolonged, after point 6, into the "rectilinear conveying profile" 2 parallel to one of axes X and Y and tangent to the end 6 of the "concave thrusting profile" 1 closer to axis Z. Such rectilinear conveying profile 2 starts from point 6 and ends at point 7. The distance thereof from one of the axes of the main orthogonal directions X and Y being parallel thereto, is called "half-width of the conveyed thrusting flow" 21 and the terminal point 7 thereof, with respect to the main direction perpendicular thereto, lies at a distance 25 resulting equal to the "half-width of the conveyed thrusting flow" 21.

In the following, a "volume profile" 3 is considered, starting from point 7 and ending at point 8, orthogonal to the preceding "rectilinear conveying profile" 2. It is far, from one of the axes of the main orthogonal directions X and Y being parallel thereto, of a distance 25 which is equal to the "half-width of the conveyed thrusting flow" 21 and ends at point 8, possibly jointly or not.

In the following, the "flow drag convex profile" 4 is considered with ne or more curvature centers ending at the beginning of the "concave thrusting profile" 5. It is provided to be collided against the driving fluid 600 without entrapping any fluid flow.

With reference to the vane 800a, the flow of the driving fluid is conveyed in a conduit (conveyed thrusting channel), the vertical walls thereof being composed starting from point 5 by the vertical profiles 1, 2, by the wall 1207, by the profile 3 of the vane 800b. The remaining walls defining the conduit are the planes 1204, Ws 1204' of the lower conveyer (Figure 16) and the corresponding planes of the superimposed conveyer, not shown. The "half-width of the conveyed thrusting flow" 21 is provided so as to define a series of superimposed conveying channels 901 a, 901 b, 901 c, 901d and/or 902a, 902b, 902c, 902d, 902e, the width B 22 thereof being equal to the double of the "half-width A of the conveyed thrusting flow" 21 itself. The four half-channels A1 911, A2 912, B1 921 e B2 922 determined by the assembly of the four vanes 800a, 800b, 800c, 800d are coincident and parallel two by two and cause an "orthogonal central crossing" 931 wherein the conveyed thrusting fluid flows converge without having a mutual contact and thus without any mutual interference. In this way, a series of conveying channels 901a, 901b, 901c, 901d are determined, parallel to axis X, and a series of conveying channels 902a, 902à, 902b, 902c, 902d, parallel to axis Y.

Hence, part F1 of the driving fluid flow colliding with a first vane, e.g. 800a, imparts a thrusting force, then enters into the series of conveying channels 901 a, 901 b, 901 c, 901d generated by the conveyers (splitting into the flows F1a, F1b, F1c, F1d), then is gathered getting out of them, to urge the opposed vane 800c with a tail thrust. The other part F2 of the driving fluid flow F collides with the vane 800b orthogonal to said first vane 800a, then it enters into the series of conveying channels 902a, 902b, 902c, 902d, 902e orthogonal to those mentioned before, so as to prevent any interference. The series of conveying channels 901 a, 901 b, 901 c, 901 d is arranged so as the fluid flow itself gets out of the other leg of the channel generating a "tail thrust FC" 223 on the concave wall 1 of the opposed vane 800d facing towards the opposite part with respect to the source of the fluid flow. The tail thrust FC, equivalent to the resulting momentum from the thrusting pressure of the tail fluid flow colliding along the whole height 802 of the vane 800c, causes, thanks to the "tail arm C" 213 the "tail driving torque MC" 202. The conveying tower 1200 comprises a series of conveyers 1201 (Figures 7 and 8) identical to each other, each rotated of 90° degrees with respect to the preceding and superimposed to the latter according to axis Z 500. Such configuration creates a series of channels identical to each other (conveying channels), each rotated of 90° degrees with respect to the preceding and superimposed to the latter.

In such a way, each fluid flow coming from a series of orthogonal channels 901a, 901 b, 901 c, 901 d and from the other series 902a, 902b, 902c, 902d, 902e is split and conveyed to produce at the outlet the respective tail thrust.

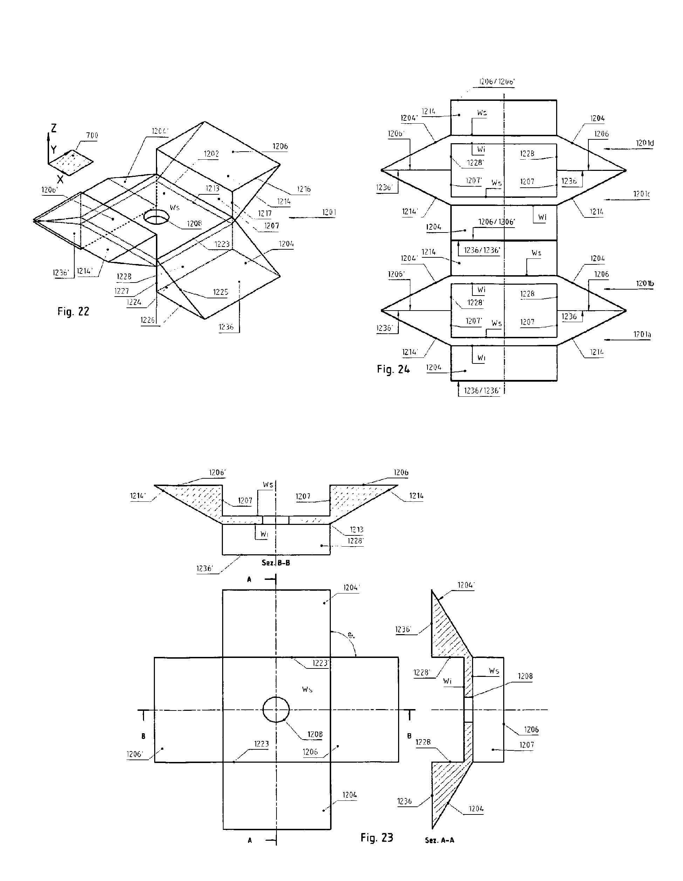

With reference to the point f view of Figure 22, the central part of each conveyer 1201 comprises a central plate 1202 having two flat faces and parallel to plane XY 700 with square geometry, the upper face called Ws and the lower face called Wi. From each of the two opposed upper sides 1223 of the perimeter of the face Ws, two sloped surfaces lead off, with the same inclined area, called conveying ramps 1204.

Each of them is the face of a prismatic body having a right-angled triangle 1224 as base and generated by the hypotenuse 1225 f said right-angled triangle. The face 1236 generated by the longer cathetus 1226 is arranged in parallel to plane XY 700 under the level of the face Wi. The face 1228 generated by the shorter cathetus 1227 is perpendicular to said plane.

A prismatic body identical to the above described one is connected to each of the two opposite lower sides 1213 belonging to the lower face Wi, but arranged in a position so as the ramp 1214 leads off from said side in ascent. Therefore, the face 1206 generated by the longer cathetus 1216 is placed in parallel to plane XY 700 over the face Ws. The face 1207 generated by the shorter cathetus 1217 is perpendicular to that plane. The faces 1204 and 1214 are called deflecting ramps. The faces 1207 and 1228 are called conveying walls. Thus, the lower part of each conveyer 1201 as above described, is placed in identical manner with respect t said upper part if such conveyer is rotated of 90° degrees. Then the faces 1236 and 1206 represent the corresponding face of the above described prisms. The superimposition of more conveyers as above described, making the faces 1206 and 1236 to fit together, generate channeled orthogonal and superimposed paths (channels 901 a, 901 b, 901 c, 901 d, 902a, 902b, 902c, 902d, 902e) wherein the flow coming from the vanes passes. Such configuration allows the orthogonal flows to not interfere with each other.

The central hole 1208 allows the alignment according o the axis with the transmission shaft 400. In such a way, both the conveying channels can generate a "thrust driving torque" (when the fluid collides on the thrust walls at the entrance of the channel) and a "tail driving torque" (when the fluid collides onto the thrust wall at the outlet of the channel on the concave wall of the opposite vane).

Two shaped decks 300 close the assembly "vanes, conveying structure" creating a sandwiched structure. The decks 300, appropriately connected to the transmission shaft, transfer the driving torque of the turbine 1000 to the shaft itself. The transmission shaft 400 is the transfer-appointed member to any kind of end unit, of the driving torque of the turbine 1000.

In conclusion, in the above described turbine, four axial vanes 800a, 800b, 800c, 800d, opposed two by two, define a channel delimited by the intradoses and by the extradoses of the vanes wherein the air flow or any other fluid flow get through a vane and get out of the opposite vane through such channel.

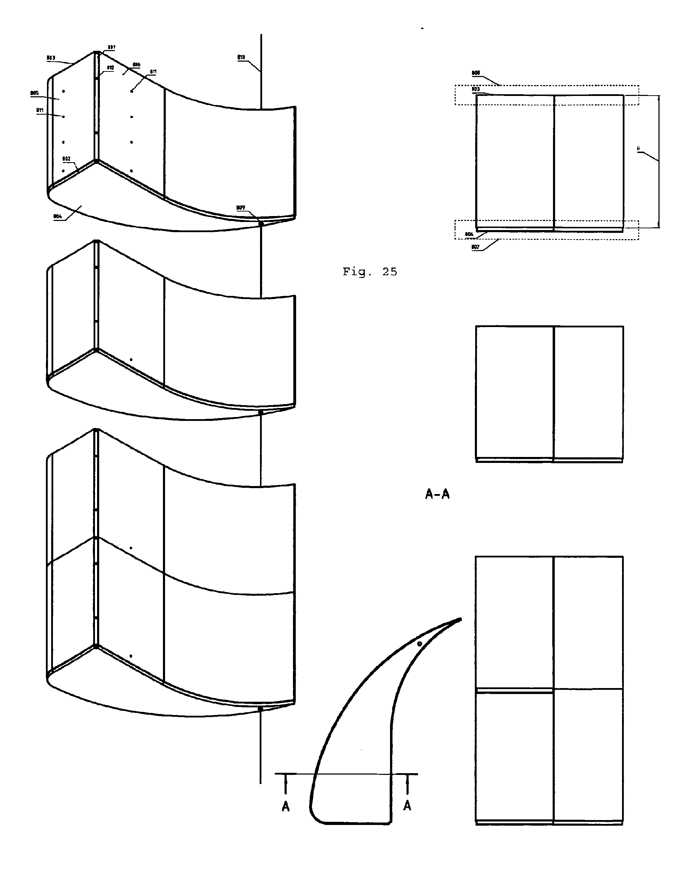

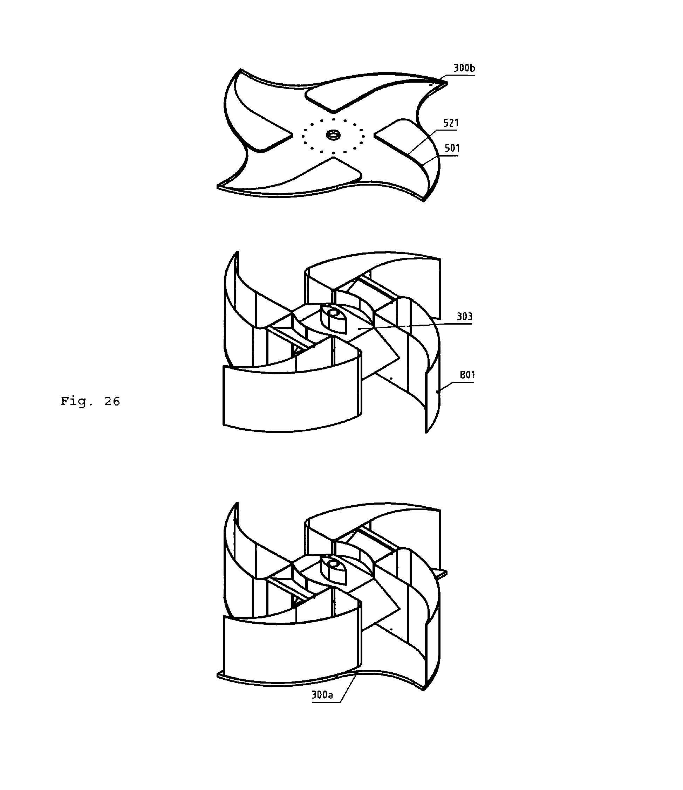

With reference to Figure 25 and 26, a first variant of the previously described turbine is disclosed hereinafter, wherein each vane has the same profile and the same section of the four vanes 800a, 800b, 800c, 800d, and further is made by the axial stacking of vane modules 801.

Each module has a connection interface 802 on the perimeter of the lower base 804, apt to the connection to the module itself, either by a suitable interface formed on the base deck 300a, either by a suitable interface 808 formed on the perimeter of the upper base 803. Such configuration of the vane module allows to obtain, by the stacking of more modules, the desired axial length of the vane to obtain the proportioning of the crossed flow turbine.

The interface formed on the perimeter of the upper base 803 is also apt to carry out the connection of the module itself by a suitable interface formed on the upper deck 300b.

The height H of the vane module is coupled to the height of the series of deflecting-conveying modules lying stacked on the transmission axis so as to assure the modular stacking replication and so as to assure the modular coincidence of the holes arranged for the mechanical connection between vane modules and the deflecting-conveying modules.

Each vane module 801 has suitable mountings on the walls 805 and 806, apt to the connection of the vane module itself with the adjacent deflecting-conveying module.

More precisely, on the wall 805 and on the wall 806 as well, a series of holes 811 are arranged vertically aligned to be progressively used as mechanical connection at the assembly, proceeding with the subsequent stacking of the turbine components. The holes are apt to connect the walls 805, 806 with the wall 302 of the deflecting-conveying module.

The vane module has a vertical wall 807 lying between the walls 805 and 806. It is placed at an angle of 45° degrees with respect to the two walls and has a series of holes 812 apt to the connection of the vane module to the plane 303 of the deflecting-conveying module and through the latter to the transmission shaft 400 of the turbine.

The bottom of the vane module 804 represents the structural member "reinforcing rib" of the vane at different partial heights determined by the heights of the vane modules themselves. On the bottom 804, close to the point, a hole 809 is formed, acting as scupper hole for the discharge of the water and as passage for the tie rod 810 of the axial containment of the vane modules 801 composing the turbine.

The tie rod 810 of calibrated length is top threaded to the upper deck 300b and bottom threaded to the base deck 300a so as to keep compressed the vane modules 801 between the two decks 300b and 300a. Such connection occurs at the point of the vane, wherein the thrust stress is higher by the driving fluid.

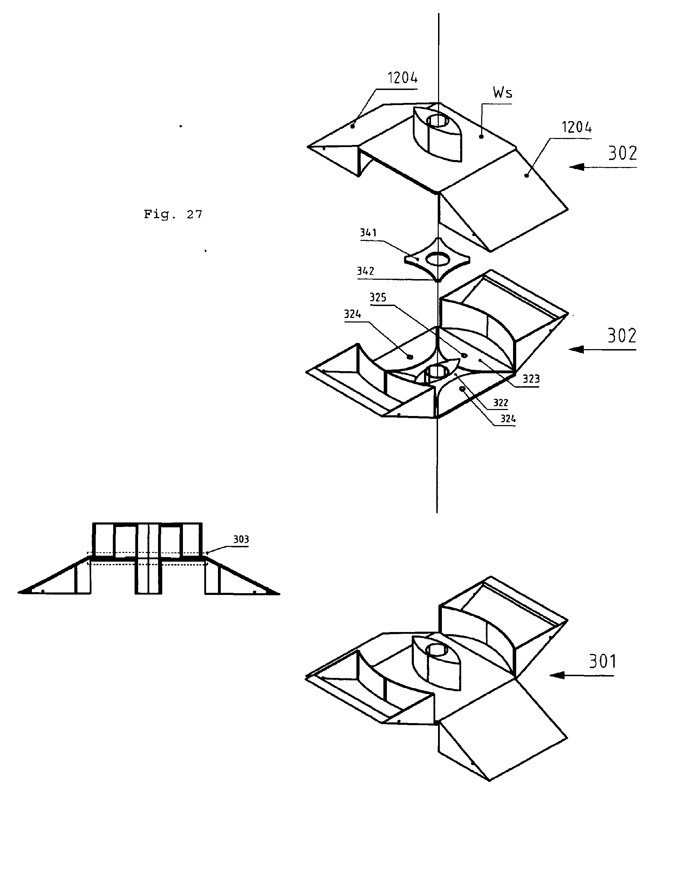

With reference to figure 27, a second variant of the turbine is such that each conveying-deflecting module 301 is made by the axial stacking of two identical sub-modules 302, having a universal coupling interface for realizing the plane 303, to be stacked axially and to be connected to the adjacent vane modules as well.

The deflecting-conveying module has a central deck 1202 and two side ramps 1204. The central deck offers a smooth surface Ws from the opposite side to the conveying ramps, while from the side Wi of the ramps, opposite to the previous one, offers a low relief 322 apt to house an annular bonding plate 341 apt to connect th vane modules by holes of the wall 307 to the turbine transmission and supporting shaft 400.

The low relief 322 has a depth of at least a half of the thickness of the plate 341.

Two deflecting sub-modules 302 are coupled facing the low relieves 322, enclosing in the formed volume the plate 341.

On the face 323 two pairs of fastenings are provided, one male 324 and one female 325, apt to rigidly connect the sub-modules 302 to each other. The four mountings 324 and 325 are used to trim the plate 341 so as to place the axes of the four holes 342 diagonally aligned with the holes 812 of the vane modules 801. Such alignment allows the connection of the vane modules through the hole 812 of the wall 807 aligned with the threaded hole 342 into the plate 341.

In a further variant, both the lower deck and the upper deck are provided with an interface frame for the vane module.

Having described some embodiments of the present invention, it is specified that not only such embodiment are to be protected, but the protection is extended to all the variants obtainable by the application of the explained features, as defined in the following claims.

## Claims

1. Crossed flow turbine (1000) provided with four axial vanes (800a, 800b, 800c, 800d), opposite two by two, wherein an air driving flow get through a vane and get out of the opposite vane through a channel defined by the intradoses and the extradoses of the vane, and wherein the rotation is transmitted to a transmission shaft (400), the four vanes being substantially identical to each other and are placed following a polar repetition with a rotation around the axis Z (500), whose height is developed according to the axis (500) of the turbine itself,
**characterized in that** it comprises conveying channels connecting such vane with the opposite one, whereby the driving fluid flow entering a vane is split in minor flows, said conveying channels being obtained axially stacking more conveying members (1201) comprising
• a central plate (1202) with square geometry and having at the centre thereof a hole for an axis and with two flat and parallel faces, namely an upper face(Ws) and a lower face (Wi);
• a down-faced projection, projecting from each of the two opposed sides;
• an up-faced projection, projecting from each of the remaining opposite sides.

2. Turbine according to claim 1, wherein the four vanes (800a, 800b, 800c, 800d) are kept in position being enclosed between an upper shaped deck (300a) and a lower shaped deck (300b).

3. Turbine according to any of the preceding claims, wherein the conveying channels connecting two opposite vanes are perpendicular to the conveying channels connecting the remaining opposite two vanes, each of said conveying members (1201) being rotated of 90° degrees with respect to the previous.

4. Turbine according to claim 1, wherein each of said projections is wedge-shaped.

5. Turbine according to claim 4, wherein from each of the two opposed upper sides (1223) of the perimeter of the face (Ws), two sloped surfaces lead off, with the same inclined area, called conveying ramps (1204) of orthogonal flows, each of them being the face of a prismatic body having a right-angled triangle (1224) as base and generated by the hypotenuse (1225) of said right-angled triangle, the face (1236) generated by the longer cathetus 1226 being arranged in parallel to plane XY (700) under the level of the face (Wi), the face (1228) generated by the shorter cathetus (1227) being perpendicular to said plane, a prismatic body identical to the above described one is connected to each of the two opposite lower sides (1213) belonging to the lower face (Wi), but arranged in a position so as the ramp (1214) leads off from said side in ascent, wherein the face (1206) generated by the longer cathetus (1216) is placed in parallel to plane XY (700) over the face (Ws) and the face (1207) generated by the shorter cathetus (1217) is perpendicular to that plane.

6. Turbine according to any of the preceding claims, wherein said conveying members (1201) transmit to the transmission shaft (400) the rotation generated by said vanes (800a, 800b, 800c, 800d).

7. Turbine according to any of the preceding claims, wherein said transmission shaft (400) is vertical.

8. Turbine according to any of preceding claims 1 to 6, wherein said transmission shaft (400) is horizontal.

9. Turbine according to any of the preceding claims, wherein each vane (800a) has an approximately drop-shaped wing profile (801) with a rectilinear base (3) provided with two ends (2, 8), from the first end (2) leading off a section (7) rectilinear and perpendicular to the base (3), then a curvilinear section (1) ending with a point (5), connected to the further end (8) of the base (3) by a curvilinear section (4).

10. Turbine according to claim 1, wherein each vane is composed by an assembly of axially stacked modules.

11. Turbine according to claim 1, wherein each conveying member (301) is made by the coupling of two sub-modules of deflecting-conveying member (302).

12. Turbine according to claim 2, wherein both the lower deck and the upper deck are provided with an interface frame for the vane module.

13. Turbine according to claim 11, wherein two deflecting sub-modules (302) are coupled facing low relieves (322) and enclosing in the volume formed an annular bond plate (341) apt to connect the vane modules through holes in the walls (807) to the transmission ad supporting shaft (400) of the turbine.

## Patentansprüche

1. Kreuzstromturbine (1000) ausgestattet mit vier, zwei und zwei gegenüberliegenden, axialen Leitschaufeln (800a, 800b, 800c, 800d), wobei eine Luftantriebsströmung durch eine Leitschaufel strömt und durch einen Kanal, definiert durch die innere Gewölbefläche und die äußere Gewölbefläche der Leitschaufel, aus der gegenüberliegenden Leitschaufel austritt und wobei die Rotation zu einer Übertragungsachse (400) übertragen wird, die vier Leitschaufeln im Wesentlichen identisch zueinander sind und einer entgegengesetzten Wiederholung mit einer Rotation um die Z-Achse (500) folgend, deren Höhe gemäß der Achse (500) der Turbine selbst gebildet ist, angeordnet sind, **dadurch gekennzeichnet, dass** sie Förderkanäle umfasst, welche eine derartige Leitschaufel mit der Gegenüberliegenden verbinden, wobei die Antriebsflüssigkeitsströmung, die in eine Leitschaufel eintritt, in Unterströmungen aufgeteilt wird, wobei die Förderkanäle, die durch axiales Stapeln mehrerer Förderteile (1201) erhalten werden, aufweisend
- eine Zentralplatte (1202) mit quadratischer Geometrie und im Zentrum dieser ein Loch für eine Achse habend, und mit zwei flachen und parallelen Flächen, nämlich einer oberen Fläche (Ws) und einer unteren Fläche (Wi);
- eine nach unten gerichtete Erhebung, sich erhebend von jeder der beiden gegenüberliegenden Seiten;
- eine nach oben gerichtete Erhebung, sich erhebend von jeder der verbleibenden gegenüberliegenden Seiten.

2. Turbine nach Anspruch 1, **dadurch gekennzeichnet, dass** die vier Leitschaufeln (800a, 800b, 800c, 800d) in Position gehalten werden durch Einschluss zwischen einem oberen geformten Deck (300a) und einem unteren geformten Deck (300b).

3. Turbine nach einem der vorhergehenden Ansprüche, **dadurch gekennzeichnet, dass** die Förderkanäle, die zwei gegenüberliegende Leitschaufeln verbinden, senkrecht zu den Förderkanälen stehen, die die verbleibenden gegenüberliegenden zwei Leitschaufeln verbinden, wobei jedes der Förderteile (1201) um 90° in Bezug auf das Vorherige gedreht ist.

4. Turbine nach Anspruch 1, **dadurch gekennzeichnet, dass** jede der Erhebungen keilförmig ausgebildet ist.

5. Turbine nach Anspruch 4, **dadurch gekennzeichnet, dass** von jeder der beiden gegenüberliegenden oberen Seiten (1223) des Umkreises der Fläche (Ws), zwei geneigte Oberflächen abführen, mit der gleichen geneigten Fläche, genannt Förderrampen (1204) des orthogonalen Flusses, wobei jede von diesen die Fläche eines prismenförmigen Körpers ist, aufweisend ein rechtwinkeliges Dreieck (1224) als Basis und erzeugt durch die Hypotenuse (1225) dieses rechtwinkeligen Dreiecks, die Fläche (1236) erzeugt durch die längere Kathete (1226), parallel zur Ebene XY (700) unter dem Niveau der Fläche (Wi) angeordnet ist, die Fläche (1228) erzeugt durch die kürzere Kathete (1227), senkrecht zu dieser Ebene ist, ein prismenförmiger Körper, identisch zu dem oben Beschriebenen, verbunden ist mit jeder der zwei gegenüberliegenden unteren Seiten (1213), zugeordnet zu der niedrigeren Fläche (Wi), jedoch in einer Position angeordnet, dass die Rampe (1214) von dieser Seite ansteigend verläuft, wobei die Fläche (1206) erzeugt durch die längere Kathete (1216) parallel zur Ebene XY (700) über die Fläche (Ws) platziert ist und die Fläche (1207), erzeugt durch die kürzere Kathete (1217), senkrecht zu dieser Ebene ist.

6. Turbine nach einem der vorherigen Ansprüche, **dadurch gekennzeichnet, dass** die Förderteile (1201) die Rotation, erzeugt durch die Leitschaufeln (800a, 800b, 800c, 800d) zu der Übertragungsachse (400) übertragen.

7. Turbine nach einem der vorherigen Ansprüche, **dadurch gekennzeichnet, dass** die Übertragungsachse (400) vertikal ist.

8. Turbine nach einem der Ansprüche 1 bis 6, **dadurch gekennzeichnet, dass** die Übertragungsachse (400) horizontal ist.

9. Turbine nach einem der vorherigen Ansprüche, **dadurch gekennzeichnet, dass** jede Leitschaufel (800a) ein annähernd tropfenförmiges Flügelprofil (801) aufweist, mit einer geradlinigen Basis (3), ausgestattet mit zwei Enden (2, 8), wobei von dem ersten Ende (2) eine Sektion (7) geradlinig und senkrecht auf die Basis (3) ableitet, außerdem eine gekrümmte Sektion (1) endend mit einem Punkt (5), verbunden mit dem weiteren Ende (8) der Basis (3) mittels einer gekrümmten Sektion (4).

10. Turbine nach Anspruch 1, **dadurch gekennzeichnet, dass** jede Leitschaufel aus einer Gruppe von axial gestapelten Modulen zusammengesetzt ist.

11. Turbine nach Anspruch 1, **dadurch gekennzeichnet, dass** jedes Förderteil (301) aus einer Kopplung von zwei Submodulen vom Ablenk-Förderteil (302) hergestellt ist.

12. Turbine nach Anspruch 2, **dadurch gekennzeichnet, dass** beide, das untere Deck und das obere Deck, mit einem Verbindungsrahmen für das Leitschaufelmodul ausgestattet sind.

13. Turbine nach Anspruch 11, **dadurch gekennzeichnet, dass** zwei Ablenk-Submodule (302) mit tieferen Aussparungen (322) zugewandt gekoppelt sind und eingefasst in dem Volumen eine kranzförmige Bindungsplatte (341) geformt ist, geeignet zur Verbindung der Leitschaufelmodule durch Löcher in den Wänden (807) mit der Übertragungs- und Unterstützungsachse (400) der Turbine.

## Revendications

1. Turbine à flux croisés (1000) munie de quatre aubes axiales (800a, 800b, 800c, 800d), opposées deux à deux, dans laquelle un écoulement d'entraînement d'air entre par une aube et sort par l'aube opposée, par l'intermédiaire d'un canal défini par les intrados et les extrados de l'aube, et dans laquelle la rotation est transmise à un arbre de transmission (400), les quatre aubes étant sensiblement identiques les unes aux autres et étant disposées suivant une répétition polaire avec une rotation autour de l'axe Z (500), dont la hauteur est développée selon l'axe (500) de la turbine elle-même,
**caractérisée en ce qu'**elle comprend des canaux de convoyage reliant une telle aube à l'aube opposée, grâce à quoi un écoulement de fluide d'entraînement entrant par une aube est divisé en écoulements mineurs, lesdits canaux de convoyage étant obtenus par empilement axial de davantage d'éléments de convoyage (1201), comprenant :
• une plaque centrale (1202) avec une géométrie carrée, et comportant au centre de celle-ci un trou pour un axe, et avec deux faces plates et parallèles, à savoir une face supérieure (Ws) et une face inférieure (Wi) ;
• une saillie dirigée vers le bas, faisant saillie à partir de chacun des deux côtés opposés ;
• une saillie dirigée vers le haut, faisant saillie à partir de chacun des côtés opposés restants.

2. Turbine selon la revendication 1, dans laquelle les quatre aubes (800a, 800b, 800c, 800d) sont maintenues dans une position renfermée entre une plateforme ayant une certaine forme supérieure (300a) et une plateforme ayant une certaine forme inférieure (300b).

3. Turbine selon l'une quelconque des revendications précédentes, dans laquelle les canaux de convoyage reliant deux aubes opposées sont perpendiculaires aux canaux de convoyage reliant les deux aubes opposées restantes, chacun desdits éléments de convoyage (1201) étant tourné de 90° par rapport au précédent.

4. Turbine selon la revendication 1, dans laquelle chacune desdites saillies est en forme de coin.

5. Turbine selon la revendication 4, dans laquelle, à partir de chacun des deux côtés opposés supérieurs (1223) de la périphérie de la face (Ws), partent deux surfaces en pente, avec la même surface inclinée, appelées rampes de convoyage (1204) d'écoulements orthogonaux, chacune d'entre elles étant la face d'un corps prismatique ayant un triangle rectangle (1224) comme base et généré par l'hypoténuse (1225) dudit triangle rectangle, la face (1236) générée par la plus longue cathète (1226) étant située en parallèle au plan XY (700) sous le niveau de la face (Wi), la face (1228) générée par la plus courte cathète (1227) étant perpendiculaire audit plan, un corps prismatique identique à celui décrit ci-dessus étant relié à chacun des deux côtés opposés inférieurs (1213) appartenant à la face inférieure (Wi), mais situé dans une position telle que la rampe (1214) parte dudit côté dans un sens ascendant, la face (1206) générée par la plus longue cathète (1216) étant située en parallèle au plan XY (700) sur la face (Ws) et la face (1207) générée par la plus courte cathète (1217) étant perpendiculaire à ce plan.

6. Turbine selon l'une quelconque des revendications précédentes, dans laquelle lesdits éléments de convoyage (1201) transmettent à l'arbre de transmission (400) la rotation générée par lesdites aubes (800a, 800b, 800c, 800d).

7. Turbine selon l'une quelconque des revendications précédentes, dans laquelle ledit arbre de transmission (400) est vertical.

8. Turbine selon l'une quelconque des revendication 1 à 6 qui précèdent, dans laquelle ledit arbre de transmission (400) est horizontal.

9. Turbine selon l'une quelconque des revendications précédentes, dans laquelle chaque aube (800a) a un profil d'aile approximativement en forme de goutte (801) avec une base rectiligne (3) munie de deux extrémités (2, 8), une section (7) rectiligne et perpendiculaire à la base (3) partant de la première extrémité (2), puis une section curviligne (1) s'achevant en un point (5), relié à l'autre extrémité (8) de la base (3) par une section curviligne (4).

10. Turbine selon la revendication 1, dans laquelle chaque aube est constituée par un ensemble de modules empilés axialement.

11. Turbine selon la revendication 1, dans laquelle chaque élément de convoyage (301) est réalisé par le couplage de deux sous-modules d'élément de convoyage et de déflexion (302).

12. Turbine selon la revendication 2, dans laquelle la plateforme inférieure et la plateforme supérieure sont toutes deux munies d'un bâti d'interface pour le module d'aubes.

13. Turbine selon la revendication 11, dans laquelle deux sous-modules de déflexion (302) sont couplés de façon à faire face à des reliefs bas (322) et à renfermer dans le volume formé une plaque de liaison annulaire (341) susceptible de relier les modules d'aubes, à travers des trous dans les parois (807), à l'arbre de transmission et de support (400) de la turbine.
